# FASCICULE DE BREVET EUROPEEN

(11) **EP 2 998 657 B1**
(45) Date de publication et mention de la délivrance du brevet: **15.08.2018**
(21) Numéro de dépôt: 15184797.7
(22) Date de dépôt: 11.09.2015
(51) Int. Cl.: F24F 7/08, F24F 11/00

(54) **SYSTÈME DE VENTILATION D'UN BÂTIMENT ET MOYEN D'ENTRÉE D'AIR À SECTION DE PASSAGE D'AIR PILOTABLE**
BELÜFTUNGSSYSTEM EINES GEBÄUDES UND STEUERBARES MITTEL ZUM UNTERTEILTEM LUFTEINLASS
VENTILATION SYSTEM FOR A BUILDING AND AIR INLET MEANS WITH A CONTROLLABLE AIR PASSAGE SECTION

(30) Priorité: 12.09.2014 FR 1458566
(43) Date de publication de la demande: 23.03.2016
(73) Titulaire: SOMFY ACTIVITES SA, 74300 Cluses (FR); Atlantic Climatisation et Ventilation, 69330 Meyzieu (FR)
(72) Inventeur: CAVAREC, Pierre-Emmanuel, 74130 MONT SAXONNEX (FR); PARIS, Sabine, 69150 DECINES (FR); DEMIA, Laurent, 01120 MONTLUEL (FR); JOUVE, Cécile, 38300 LES EPARRES (FR)
(74) Mandataire: Lavoix

(56) Documents cités:
- EP-A1- 2 175 208
- WO-A1-00/43715
- WO-A1-2012/025122
- US-A1- 2013 324 027

## Description

La présente invention concerne un système de ventilation d'un bâtiment.

De manière générale, la présente invention concerne le domaine de la ventilation d'un bâtiment par l'intermédiaire de moyens d'entrée d'air pouvant être pilotés, de sorte à garantir une circulation d'air à l'intérieur du bâtiment vers au moins un moyen d'évacuation d'air.

On connaît déjà un système de ventilation d'un bâtiment, dit à simple flux et hygroréglable, comprenant des trappes d'entrée d'air à section de passage d'air variable et des bouches d'extraction d'air à section de passage d'air variable.

Les bouches d'extraction d'air sont disposées dans des locaux humides, tels qu'une salle de bain, des toilettes ou une cuisine. Chaque local humide est pourvu d'une bouche d'extraction d'air. Chaque bouche d'extraction d'air comprend un organe sensible à l'humidité, en particulier un tissu sensible à l'humidité. Ce type de bouche d'extraction d'air est appelé communément hygroréglable. Les fibres du tissu sensible à l'humidité s'allongent en présence d'humidité dans l'air et se rétrécissent lorsque l'air est sec. Et l'ouverture et la fermeture d'un volet de la bouche d'extraction d'air est commandé par des moyens mécaniques en fonction du niveau d'humidité détecté par l'organe sensible à l'humidité. L'organe sensible à l'humidité agit sur les moyens mécaniques, de sorte à commander l'ouverture et la fermeture du volet de la bouche d'extraction d'air. Le déplacement du volet modifie la section de passage d'air de la bouche d'extraction d'air.

Les bouches d'extraction d'air sont également reliées de manière fluidique avec un groupe de ventilation mécanique comprenant un ventilateur. Et le groupe de ventilation mécanique est relié de manière fluidique à un orifice de rejet d'air.

Les trappes d'entrée d'air sont disposées dans des locaux secs, tels qu'un séjour ou une chambre. Chaque local sec est pourvu d'une ou plusieurs trappes d'entrée d'air. Chaque trappe d'entrée d'air comprend un organe sensible à l'humidité disposé entre l'intérieur et l'extérieur du bâtiment, en particulier un tissu sensible à l'humidité. Ce type de trappe d'entrée d'air est appelé communément hygroréglable. Les fibres du tissu sensible à l'humidité s'allongent en présence d'humidité dans l'air et se rétrécissent lorsque l'air est sec. Et l'ouverture et la fermeture d'un volet de la trappe d'entrée d'air est commandé par des moyens mécaniques en fonction du niveau d'humidité détecté par l'organe sensible à l'humidité. L'organe sensible à l'humidité agit sur les moyens mécaniques, de sorte à commander l'ouverture et la fermeture du volet de la trappe d'entrée d'air. Le déplacement du volet modifie la section de passage d'air de la trappe d'entrée d'air.

La dépression générée par le groupe de ventilation mécanique permet à l'air de pénétrer dans le bâtiment au travers des trappes d'entrée d'air. Les trappes d'entrée d'air sont généralement disposées au niveau des encadrements de fenêtres, ou encore au niveau des coffres de volets roulant.

L'ouverture et la fermeture du volet des trappes d'entrée d'air sont indépendantes de l'ouverture et de la fermeture du volet des bouches d'extraction d'air.

En outre, l'organe sensible à l'humidité des trappes d'entrée d'air est positionné à proximité immédiate de l'ouverture d'entrée d'air des trappes d'entrée d'air.

Ce système de ventilation d'un bâtiment présente l'inconvénient de commander les trappes d'entrée d'air par une détection d'humidité à l'intérieur du bâtiment tout en étant influencée par les conditions météorologiques à l'extérieur du bâtiment à cause du positionnement de l'organe sensible à l'humidité dans les trappes d'entrée d'air.

Par conséquent, la commande des trappes d'entrée d'air est dépendante de l'humidité à l'intérieur du bâtiment et de l'humidité extérieure au bâtiment, ainsi que de la température extérieure au bâtiment.

La commande de telles trappes d'entrée d'air par un organe sensible à l'humidité disposé entre l'intérieur et l'extérieur du bâtiment présente une régulation erronée et de précision médiocre, puisque l'humidité et la température extérieures engendrent des incohérences dans la commande du volet des trappes d'entrée d'air.

Dans le cas où l'humidité de l'air extérieur au bâtiment est faible, par exemple lorsque la température de l'air extérieur au bâtiment est basse, l'organe sensible à l'humidité positionne le volet des trappes d'entrée d'air en position fermée trop fréquemment, puisque cet organe sensible à l'humidité sous-estime l'humidité de l'air à l'intérieur du bâtiment et, par conséquent, tend à sous-ventiler le bâtiment. La sous-estimation de l'humidité de l'air à l'intérieur du bâtiment est provoquée par le passage de l'air provenant de l'extérieur du bâtiment, traversant les trappes d'entrée d'air le long de l'organe sensible à l'humidité et au mélange de l'air provenant de l'extérieur du bâtiment avec l'air présent à l'intérieur du bâtiment, alors que l'air à l'extérieur du bâtiment présente un taux d'humidité inférieur à l'air à l'intérieur du bâtiment.

WO-A-00/43715 divulgue un appareil de conditionnement d'air qui inclut une bouche d'entrée équipée d'un registre commandé par un actionneur, lui-même contrôlé par un module logique. Cet appareil ne permet pas de tenir compte des priorités souhaitées par un utilisateur.

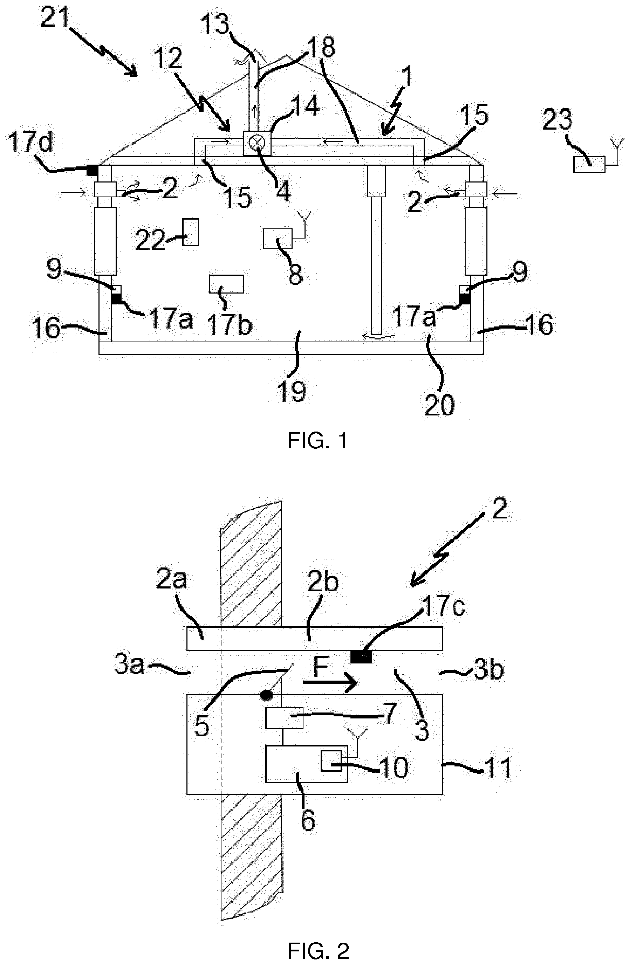

Par ailleurs, WO-A-2012/025122 divulgue une méthode et un système de ventilation d'un local fermé. Une unité de ventilation représentée à la figure 1 peut être montée dans une paroi d'un bâtiment. Différentes unités de ventilation sont commandées par un contrôleur disposé de façon centrale dans le bâtiment, alors que des unités locales permettent de détecter les besoins en ventilation qui sont transmis à l'unité de contrôle central. L'utilisateur n'est pas en mesure de prendre la main par rapport au contrôleur central.

On connaît également le document DE-U-200 01 193 qui décrit un système de ventilation d'un bâtiment dans lequel un réglage manuel d'un différentiel de pression, de part et d'autre d'une entrée d'air à section de passage d'air pilotage, peut être réalisé par un sélecteur, sans envisager de hiérarchie dans les ordres de commande.

La présente invention a pour but de résoudre les inconvénients précités et de proposer un système de ventilation d'un bâtiment permettant d'améliorer la précision de la commande des moyens d'entrée d'air à section de passage d'air pilotable, de sorte à garantir une optimisation du renouvellement de l'air dans le bâtiment, et un maintien du niveau de qualité de l'air dans le bâtiment, et à moduler le débit d'air extérieur entrant dans le bâtiment en fonction de données d'entrée fiables recueillies par le système de ventilation.

A cet égard, la présente invention vise un système de ventilation d'un bâtiment comprenant :
- des moyens d'entrée d'air à section de passage d'air pilotable, où un flux d'air s'écoule depuis l'extérieur vers l'intérieur du bâtiment au travers de chacun des moyens d'entrée d'air à section de passage d'air pilotable,
- au moins un moyen d'évacuation d'air,
- des moyens de commande coopérant avec les moyens d'entrée d'air à section de passage d'air pilotable, où les moyens de commande contrôlent l'ouverture et la fermeture des moyens d'entrée d'air à section de passage d'air pilotable,
- au moins un moyen d'entrée de données relatives à au moins un paramètre de l'environnement à l'intérieur du bâtiment, et/ou à au moins un paramètre de l'environnement à l'extérieur du bâtiment, et/ou à au moins une présence à l'intérieur du bâtiment, acquises par l'intermédiaire d'au moins un capteur et/ou au travers d'une interface homme-machine et/ou par l'intermédiaire d'un réseau de communication,
dans lequel
∘ les moyens de commande comprennent des unités de contrôle électroniques,
∘ les unités de contrôle électroniques contrôlent électriquement l'ouverture et la fermeture des moyens d'entrée d'air à section de passage d'air pilotable en fonction d'au moins une donnée d'entrée acquise par ledit au moins un moyen d'entrée de données, de sorte à ajuster l'ouverture de la section de passage d'air des moyens d'entrée d'air à section de passage d'air pilotable,
∘ chaque moyen d'entrée d'air à section de passage d'air pilotable est disposé au niveau d'une paroi du bâtiment, de sorte à créer une communication fluidique directe entre l'extérieur et l'intérieur du bâtiment,
∘ les moyens de commande comprennent également une unité de commande centrale, qui communique avec les unités de contrôle électroniques, ainsi que des unités de commande locales qui communiquent avec les unités de contrôle électroniques.

Conformément à l'invention, l'activation de l'une des unités de commande locales par l'utilisateur est prioritaire par rapport à l'unité de commande centrale, de sorte à contrôler l'ouverture ou la fermeture d'au moins l'un des moyens d'entrée d'air à section de passage d'air pilotable.

En outre, l'activation de l'une des unités de commande locales commande directement au moins l'une des unités de contrôle électroniques des moyens d'entrée d'air à section de passage d'air pilotable en fonction d'une sélection par l'utilisateur, et en inhibant un ordre de commande émis par l'unité de commande centrale ou en ignorant une donnée provenant du capteur du moyen d'entrée de données.

Ainsi, le système de ventilation d'un bâtiment permet de commander électriquement des moyens d'entrée d'air à section de passage d'air pilotable en fonction d'une ou plusieurs données relatives à au moins un paramètre de l'environnement à l'intérieur du bâtiment, et/ou à au moins un paramètre de l'environnement à l'extérieur du bâtiment, et/ou à au moins une présence à l'intérieur du bâtiment, de sorte à permettre un écoulement d'air entre l'extérieur et l'intérieur du bâtiment, au travers des moyens d'entrée d'air à section de passage d'air pilotable. En particulier, l'activation d'une unité de commande locale permet à un utilisateur de piloter directement un ou plusieurs moyens d'entrée d'air à section de passage d'air pilotable, de façon prioritaire par rapport à l'unité de commande centrale. L'utilisateur est donc en mesure d'adapter le niveau de flux d'air dans la pièce dans laquelle il se trouve, ce qui améliore son confort, efficacement et de façon rapide.

De cette manière, un tel système de ventilation d'un bâtiment permet d'améliorer la précision de la commande des moyens d'entrée d'air à section de passage d'air pilotable, de sorte à garantir une optimisation du renouvellement de l'air dans le bâtiment, et un maintien du niveau de qualité de l'air dans le bâtiment.

Selon une caractéristique préférée de l'invention, ledit système de ventilation comprend également au moins un ventilateur, ledit au moins un ventilateur mettant en circulation l'air depuis les moyens d'entrée d'air à section de passage d'air pilotable vers ledit au moins un moyen d'évacuation d'air.

Selon une caractéristique préférée d'un mode de réalisation de l'invention, ledit au moins un ventilateur fait partie intégrante d'un groupe de ventilation mécanique et ledit au moins un moyen d'évacuation d'air comprend des bouches d'extraction d'air, où les bouches d'extraction d'air sont reliées de manière fluidique au groupe de ventilation mécanique par un réseau d'extraction d'air comportant des conduites d'évacuation d'air.

Selon une caractéristique préférée d'un autre mode de réalisation de l'invention, au moins une partie des moyens d'entrée d'air à section de passage d'air pilotable comprennent respectivement au moins un ventilateur.

En pratique, le bâtiment comprend au moins un local sec et au moins un local humide et ledit au moins un local sec comprend au moins un capteur mesurant au moins un paramètre de l'environnement à l'intérieur dudit au moins un local sec. Le capteur fait partie du moyen d'entrée de données.

Avantageusement, ledit au moins un local humide comprend également au moins un capteur mesurant ledit au moins un paramètre de l'environnement à l'intérieur dudit au moins un local humide. Le capteur fait partie du moyen d'entrée de données.

Selon une autre caractéristique de l'invention, ledit système comprend au moins un capteur de présence disposé dans le bâtiment, où les moyens de commande contrôlent l'ouverture et la fermeture des moyens d'entrée d'air à section de passage d'air pilotable en fonction du capteur de présence. Le capteur fait partie du moyen d'entrée de données.

Préférentiellement, les moyens de commande contrôlent l'ouverture d'au moins l'un des moyens d'entrée d'air à section de passage d'air pilotable pendant une période de temps prédéterminée suite à la détection d'une présence par ledit au moins un capteur de présence.

Selon une autre caractéristique de l'invention, au moins une partie des moyens d'entrée d'air à section de passage d'air pilotable comportent respectivement un capteur mesurant au moins un paramètre de l'air traversant le moyen d'entrée d'air à section de passage d'air pilotable correspondant. Le capteur fait partie du moyen d'entrée de données. En outre, les moyens de commande contrôlent l'ouverture et la fermeture des moyens d'entrée d'air à section de passage d'air pilotable en fonction d'au moins un paramètre de l'air traversant lesdits moyens d'entrée d'air à section de passage d'air pilotable.

Selon une autre caractéristique de l'invention, ledit système comprend également des moyens d'entrée d'air à section de passage d'air fixe, auto-réglable ou hygroréglable, différents des moyens d'entrée d'air à section de passage d'air pilotable.

Selon une caractéristique préférée d'un mode de réalisation de l'invention, les moyens de commande contrôlent les moyens d'entrée d'air à section de passage d'air pilotable en fonctionnement binaire, où le passage d'un premier état de fonctionnement à un deuxième état de fonctionnement est fonction du franchissement d'une valeur seuil du paramètre de l'environnement à l'intérieur du bâtiment et/ou d'une valeur seuil du paramètre de l'environnement à l'extérieur du bâtiment et/ou en fonction de la détection de présence à l'intérieur du bâtiment.

Selon une caractéristique préférée d'un autre mode de réalisation de l'invention, les moyens de commande contrôlent les moyens d'entrée d'air à section de passage d'air pilotable de manière corrélative par rapport à au moins une donnée relative au paramètre de l'environnement à l'intérieur du bâtiment et/ou au paramètre de l'environnement à l'extérieur du bâtiment et/ou à la présence à l'intérieur du bâtiment.

En pratique, les moyens d'entrée d'air à section de passage d'air pilotable sont des trappes d'entrée d'air actionnées électriquement, et en particulier motorisées, où chaque trappe d'entrée d'air comprend au moins un volet d'obturation d'un conduit de circulation d'air ménagé dans un corps de ladite trappe.

D'autres particularités et avantages de l'invention apparaîtront encore dans la description ci-après, faite en référence aux dessins annexés, donnés à titre d'exemples non limitatifs :
- la figure 1 est une vue schématique d'un système de ventilation d'un bâtiment conforme à un mode de réalisation de l'invention ; et
- la figure 2 est une vue schématique en coupe d'un moyen d'entrée d'air à section de passage d'air pilotable appartenant au système de ventilation illustré à la figure 1.

On va décrire, en référence aux figures 1 et 2, un système de ventilation d'un bâtiment, conforme à un mode de réalisation de l'invention.

Le bâtiment 21 comprend un système de ventilation 1.

Le bâtiment 21 comprend au moins un local sec 19, par exemple un salon ou une chambre, et au moins un local humide 20, par exemple une cuisine ou une salle de bains.

Ledit au moins un local sec 19 et ledit au moins un local humide 20 du bâtiment 21 sont, par exemple, inclus dans une maison particulière, ou dans un immeuble collectif regroupant plusieurs appartements, ou encore dans un immeuble de bureaux.

Le système de ventilation 1 du bâtiment 21 comprend des moyens d'entrée d'air à section de passage d'air pilotable 2.

Un flux d'air F s'écoule depuis l'extérieur vers l'intérieur du bâtiment 21 au travers de chacun des moyens d'entrée d'air à section de passage d'air pilotable 2, en particulier, suite à l'ouverture du moyen d'entrée d'air à section de passage d'air pilotable 2.

Les moyens d'entrée d'air à section de passage d'air pilotable 2 sont, par exemple, disposés au niveau d'une façade d'un châssis de fenêtre ou de porte, ou au niveau d'une façade d'un coffre de volet roulant, ou encore au niveau d'une façade d'un mur du bâtiment 21.

Le système de ventilation 1 comprend des moyens de commande 6, 8, 9 coopérant avec les moyens d'entrée d'air à section de passage d'air pilotable 2. Les moyens de commande 6, 8, 9 contrôlent l'ouverture et la fermeture des moyens d'entrée d'air à section de passage d'air pilotable 2.

Les moyens de commande 6, 8, 9 comprennent des unités de contrôle électroniques 6.

Les unités de contrôle électroniques 6 sont associées aux moyens d'entrée d'air à section de passage d'air pilotable 2.

Dans un mode de réalisation, les unités de contrôle électroniques 6 sont des modules de contrôle électroniques intégrés dans les moyens d'entrée d'air à section de passage d'air pilotable 2.

Dans un autre mode de réalisation non représenté, les unités de contrôle électroniques 6 sont des modules de contrôle électroniques connectés électriquement aux moyens d'entrée d'air à section de passage d'air pilotable 2 et distants de ceux-ci.

Dans un mode de réalisation, les moyens de commande 6, 8, 9 comprennent également une unité de commande centrale 8 qui communique avec les unités de contrôle électroniques 6.

Dans un mode de réalisation, les moyens de commande 6, 8, 9 comprennent également des unités de commande locales 9 qui communiquent avec les unités de contrôle électroniques 6 et/ou avec l'unité de commande centrale 8.

Ici, et tel qu'illustré à la figure 1, les moyens de commande 6, 8, 9 comprennent les unités de contrôle électroniques 6 et, en outre, l'unité de commande centrale 8 et les unités de commande locales 9.

En pratique, chaque moyen d'entrée d'air à section de passage d'air pilotable 2 est disposé au niveau d'une paroi 16 du bâtiment 21, de sorte à créer une communication fluidique directe entre l'extérieur et l'intérieur du bâtiment 21.

Ainsi, l'écoulement d'air au travers de chacun des moyens d'entrée d'air à section de passage d'air pilotable 2 est mis en oeuvre depuis une face externe d'une paroi 16 du bâtiment 21 jusqu'à une face interne de la même paroi 16 du bâtiment 21.

De cette manière, la communication fluidique directe entre l'extérieur et l'intérieur du bâtiment 21 au travers de chacun des moyens d'entrée d'air à section de passage d'air pilotable 2 permet de s'affranchir de gaines de ventilation.

La face externe d'une paroi 16 du bâtiment 21 peut être une façade externe d'un mur du bâtiment 21, ou encore une façade d'un coffre d'un dispositif d'occultation, tel qu'un volet roulant, où le coffre est disposé contre le côté externe de la paroi 16 du bâtiment 21.

Et la face interne d'une paroi 16 du bâtiment 21 peut être, notamment, une façade interne d'un mur du bâtiment 21, ou encore une façade d'un coffre d'un dispositif d'occultation, tel qu'un volet roulant, où le coffre est disposé contre le côté interne de la paroi 16 du bâtiment 21.

Dans un mode de réalisation, la paroi 16 du bâtiment 21 correspond à une ou plusieurs fenêtres du bâtiment 21.

Avantageusement, au niveau de chacun des moyens d'entrée d'air à section de passage d'air pilotable 2 disposés au niveau d'une paroi 16 du bâtiment 21, la distance entre une face externe d'une paroi 16 du bâtiment 21 et une face interne de la même paroi 16 du bâtiment 21 est comprise dans une plage s'étendant entre 3 centimètres et 50 centimètres, et de préférence de l'ordre de 25 centimètres.

En pratique, les moyens d'entrée d'air à section de passage d'air pilotable 2 sont de forme longiligne et permettent un montage aisé dans une découpe ménagée, par exemple, dans une façade du dormant de fenêtres, ou dans une façade du coffre de volet roulant.

Dans un mode de réalisation, les moyens d'entrée d'air à section de passage d'air pilotable 2 peuvent être disposés au travers d'un mur du bâtiment 21.

Dans un tel cas, les moyens d'entrée d'air à section de passage d'air pilotable 2 peuvent comprendre des moyens d'isolation acoustique, de sorte à limiter le passage de nuisances sonores depuis l'extérieur du bâtiment 21 vers l'intérieur du bâtiment 21.

Chaque moyen d'entrée d'air à section de passage d'air pilotable 2 comprend une partie externe 2a, où la partie externe 2a est en communication fluidique directe avec l'air extérieur au bâtiment 21, et une partie interne 2b, où la partie interne 2b est en communication fluidique directe avec l'air à l'intérieur du bâtiment 21.

En référence à la figure 2, la séparation entre la partie externe 2a et la partie interne 2b du moyen d'entrée d'air à section de passage d'air pilotable 2 est représentée par une ligne théorique en traits pointillés.

Dans un mode réalisation, le moyen d'entrée d'air à section de passage d'air pilotable 2 est intégré à un coffre d'un dispositif d'occultation, tel qu'un volet roulant.

Dans un tel cas, la partie externe 2a du moyen d'entrée d'air à section de passage d'air pilotable 2 est disposée au sein du coffre du dispositif d'occultation, et la partie interne 2b du moyen d'entrée d'air à section de passage d'air pilotable 2 est disposée en dehors du coffre du dispositif d'occultation ainsi qu'à l'intérieur du bâtiment 21.

Le moyen d'entrée d'air à section de passage d'air pilotable 2 comprend également un conduit de circulation d'air 3. Le conduit de circulation d'air 3 comprend une ouverture d'entrée d'air 3a, ménagée dans la partie externe 2a du moyen d'entrée d'air à section de passage d'air pilotable 2, et une ouverture de sortie d'air 3b, ménagée dans la partie interne 2b du moyen d'entrée d'air à section de passage d'air pilotable 2.

Ainsi, le conduit de circulation d'air 3 du moyen d'entrée d'air à section de passage d'air pilotable 2 permet de mettre en circulation l'air extérieur au bâtiment 21 depuis l'ouverture d'entrée d'air 3a vers l'ouverture de sortie d'air 3b.

Préférentiellement, le système de ventilation 1 comprend également au moins un ventilateur 4.

La circulation de l'air extérieur au bâtiment 21 depuis l'ouverture d'entrée d'air 3a vers l'ouverture de sortie d'air 3b au travers du conduit de circulation d'air 3 du moyen d'entrée d'air à section de passage d'air pilotable 2 est mise en oeuvre par l'intermédiaire dudit au moins un ventilateur 4.

En variante, la circulation de l'air extérieur au bâtiment 21 depuis l'ouverture d'entrée d'air 3a vers l'ouverture de sortie d'air 3b au travers du conduit de circulation d'air 3 du moyen d'entrée d'air à section de passage d'air pilotable 2 est mise en oeuvre par tout autre dispositif générant une dépression d'air entre au moins un local sec 19 du bâtiment 21 ou au moins un local humide 20 du bâtiment 21 et l'extérieur du bâtiment 21.

Dans un tel cas, où la circulation de l'air extérieur entrant dans le bâtiment 21 est mise en oeuvre par un dispositif générant une dépression d'air entre au moins un local sec 19 du bâtiment 21 ou au moins un local humide 20 du bâtiment 21 et l'extérieur du bâtiment 21, ce dispositif de génération de dépression peut être mis en oeuvre selon le principe de convection naturelle, en utilisant, notamment, des cheminées, ou encore des éléments générant une circulation fluidique selon le principe de l'effet Venturi.

En pratique, les moyens d'entrée d'air à section de passage d'air pilotable 2 sont des trappes d'entrée d'air actionnées électriquement, et en particulier motorisées, où chaque trappe d'entrée d'air comprend au moins un volet d'obturation 5 du conduit de circulation d'air 3 ménagé dans un corps de ladite trappe.

Ici, la trappe d'entrée d'air comprend un unique volet d'obturation 5. En variante, la trappe d'entrée d'air peut comprendre une pluralité de volets d'obturation 5, pouvant être commandés de manière corrélée au moyen d'une unité de contrôle électronique 6.

Le volet d'obturation 5 de la trappe d'entrée d'air peut être disposé à l'intérieur du conduit de circulation d'air 3, ou encore à proximité de l'ouverture d'entrée d'air 3a ou de l'ouverture de sortie d'air 3b ménagées respectivement à une extrémité du conduit de circulation d'air 3.

Ici, le volet d'obturation 5, disposé à l'intérieur du conduit de circulation d'air 3, est orientable.

Le volet d'obturation 5 permet d'ajuster l'aire de la section de passage d'air du conduit de circulation d'air 3.

De cette manière, le volet d'obturation 5 constitue un moyen de contrôle de l'ouverture de la section de passage d'air du conduit de circulation d'air 3.

Dans un mode de réalisation, le volet d'obturation 5 peut permettre de moduler l'ouverture de la section de passage d'air du conduit de circulation d'air entre une position ouverte, correspondant à une valeur de 100% de l'aire maximale de la section de passage d'ai au niveau du volet 5, et une position fermée, correspondant à une valeur de 0% de cette aire.

La position fermée peut être une position empêchant l'écoulement d'un flux d'air F au travers du conduit de circulation d'air 3 du moyen d'entrée d'air à section de passage d'air pilotable 2. En variante, cette position fermée permet l'écoulement d'un flux d'air F minimal au travers du conduit de circulation d'air 3 du moyen d'entrée d'air à section de passage d'air pilotable 2.

Le moyen de contrôle de l'ouverture de la section de passage d'air du conduit de circulation d'air, formé du volet 5 dans l'exemple, n'est nullement limitatif et peut être différent. En particulier, il peut s'agir d'un dispositif à déformation, tel qu'une poche souple à pression interne variable.

Le volet d'obturation 5 du moyen d'entrée d'air à section de passage d'air pilotable 2 est contrôlé électriquement par l'intermédiaire d'une unité de contrôle électronique 6 et d'un actionneur électromécanique 7.

A titres d'exemples nullement limitatifs, l'actionneur électromécanique 7 pilotant le positionnement du volet d'obturation 5 du moyen d'entrée d'air à section de passage d'air pilotable 2 peut comporter un moteur électrique ou encore un électroaimant.

L'actionneur électromécanique 7 est alimenté en énergie électrique par un réseau d'alimentation électrique du secteur, ou encore au moyen d'une batterie, pouvant être rechargée, par exemple, par un panneau photovoltaïque ou tout autre système de récupération d'énergie, notamment, de type thermique ou aéraulique. L'actionneur électromécanique 7 permet de déplacer le volet d'obturation 5 du moyen d'entrée d'air à section de passage d'air pilotable 2.

L'actionneur électromécanique 7 est connecté électriquement à l'unité de contrôle électronique 6 associée au moyen d'entrée d'air à section de passage d'air pilotable 2.

L'unité de contrôle électronique 6 du moyen d'entrée d'air à section de passage d'air pilotable 2 est reliée en liaison filaire ou non filaire avec une unité de commande centrale 8.

En pratique, l'unité de commande centrale 8 pilote l'unité de contrôle électronique 6 du moyen d'entrée d'air à section de passage d'air pilotable 2, ainsi que d'autres unités de contrôle électroniques 6 similaires et réparties dans le bâtiment 21, pouvant faire partie intégrante d'autres moyens d'entrée d'air à section de passage d'air pilotable 2.

L'unité de commande centrale 8 peut être en communication avec une station météorologique déportée à l'extérieur du bâtiment 21, incluant, notamment, un ou plusieurs capteurs 17d pouvant être configurés pour déterminer, par exemple, une température, une hygrométrie, une vitesse de vent ou encore une mesure d'un paramètre de qualité d'air extérieur.

L'unité de commande centrale 8 peut également être en communication avec un serveur 23, de sorte à contrôler les moyens d'entrée d'air à section de passage d'air pilotable 2 suivant des données mises à disposition à distance par l'intermédiaire d'un réseau de communication, en particulier un réseau internet pouvant être relié au serveur 23.

L'unité de contrôle électronique 6 du moyen d'entrée d'air à section de passage d'air pilotable 2 peut également être commandée depuis une unité de commande locale 9. L'unité de commande locale 9 est pourvue d'un clavier de commande. Le clavier de commande de l'unité de commande locale 9 comprend des moyens de sélection et, éventuellement, des moyens d'affichage.

A titre d'exemples nullement limitatifs, les moyens de sélection peuvent être des boutons poussoirs ou des touches sensitives, les moyens d'affichage peuvent être des diodes électroluminescentes, un afficheur LCD (acronyme du terme anglo-saxon « Liquid Crystal Display ») ou TFT (acronyme du terme anglo-saxon « Thin Film Transistor »). Les moyens de sélection et d'affichage peuvent être également réalisés au moyen d'un écran tactile.

L'unité de commande locale 9 peut être un point de commande fixe ou nomade. Un point de commande fixe correspond à un boîtier de commande destiné à être fixé sur une façade d'un mur du bâtiment 21, ou encore sur une façade du dormant de fenêtres. Un point de commande nomade correspond à une télécommande.

Les unités de commande locales 9 permettent de commander directement les unités de contrôle électroniques 6 des moyens d'entrée d'air à section de passage d'air pilotable 2 en fonction d'une sélection effectuée par l'utilisateur.

L'unité de commande locale 9 permet à un utilisateur d'intervenir directement sur l'actionneur électromécanique 7 d'un moyen d'entrée d'air à section de passage d'air pilotable 2 par l'intermédiaire de l'unité de contrôle électronique 6 associée à ce moyen d'entrée d'air à section de passage d'air pilotable 2, ou d'intervenir indirectement sur l'actionneur électromécanique 7 du moyen d'entrée d'air à section de passage d'air pilotable 2 par l'intermédiaire de l'unité de commande centrale 8.

Dans un mode de réalisation comprenant plusieurs unités de commande locales 9, au moins une partie de ces unités de commande locales 9 pilotent, d'une part, au moins l'un des moyens d'entrée d'air à section de passage d'air pilotable 2, soit par l'intermédiaire de l'unité de commande centrale 8 soit directement en communiquant avec l'unité de contrôle électronique 6 correspondante, et, d'autre part, une installation domotique, notamment un dispositif d'occultation.

L'unité de contrôle électronique 6 du moyen d'entrée d'air à section de passage d'air pilotable 2 est configurée pour exécuter les commandes d'ouverture ou de fermeture du volet d'obturation 5 du moyen d'entrée d'air à section de passage d'air pilotable 2, pouvant être émises, notamment, par le point de commande 9 ou l'unité de commande centrale 8.

L'unité de contrôle électronique 6 est ainsi apte à mettre en fonctionnement l'actionneur électromécanique 7 du moyen d'entrée d'air à section de passage d'air pilotable 2, et, en particulier, permettre l'alimentation en énergie électrique de l'actionneur électromécanique 7.

L'unité de contrôle électronique 6 comprend également un module de réception d'ordres 10, en particulier d'ordres radioélectriques émis par un émetteur d'ordres, tel que l'unité de commande locale 9 ou l'unité de commande centrale 8, ces ordres étant destinés à commander le moyen d'entrée d'air à section de passage d'air pilotable 2.

Le module de réception d'ordres 10 peut également permettre la réception d'ordres transmis par des moyens filaires.

Ici, et tel qu'illustré à la figure 2, l'unité de contrôle électronique 6 est disposée à l'intérieur d'un carter 11 du moyen d'entrée d'air à section de passage d'air pilotable 2.

L'unité de contrôle électronique 6 du moyen d'entrée d'air à section de passage d'air pilotable 2 comprend des moyens matériels et/ou logiciels.

A titre d'exemple nullement limitatif, les moyens matériels peuvent comprendre au moins un microcontrôleur.

Le système de ventilation 1 comprend également au moins un moyen d'évacuation d'air 12.

Avantageusement, ledit au moins un moyen d'évacuation d'air 12 comprend au moins un orifice de rejet d'air 13, en particulier vers l'extérieur du bâtiment 21.

A titre d'exemple nullement limitatif, ledit au moins un orifice de rejet d'air 13 peut être réalisé au moyen d'une conduite d'évacuation d'air débouchant au travers d'une toiture du bâtiment 21.

Préférentiellement, ledit au moins un ventilateur 4 met en circulation l'air depuis les moyens d'entrée d'air à section de passage d'air pilotable 2 vers ledit au moins un moyen d'évacuation d'air 12.

Ainsi, ledit au moins un ventilateur 4 permet de mettre en oeuvre une circulation d'air dans le système de ventilation 1 du bâtiment 21 étant de type à simple flux depuis les moyens d'entrée d'air à section de passage d'air pilotable 2 vers le ou les moyens d'évacuation d'air 12.

Dans le cas où le système de ventilation 1 du bâtiment 21 comprend ledit au moins un ventilateur 4, ledit au moins un ventilateur 4 fait partie intégrante dudit au moins un moyen d'évacuation d'air 12.

Dans un mode de réalisation, ledit au moins un ventilateur 4 fait partie intégrante d'un groupe de ventilation mécanique 14.

Ainsi, le groupe de ventilation mécanique 14 comportant ledit au moins un ventilateur 4 permet de mettre en oeuvre une circulation d'air à l'intérieur du bâtiment 21 depuis les moyens d'entrée d'air à section de passage d'air pilotable 2 vers le ou les moyens d'évacuation d'air 12, de sorte à créer un renouvellement d'air dans l'ensemble des locaux secs et humides du bâtiment 21 au moyen d'un réseau d'extraction d'air et du groupe de ventilation mécanique 14 tout en modulant le débit d'entrée d'air par les moyens d'entrée d'air à section de passage d'air pilotable 2.

Dans un tel cas, les moyens d'entrée d'air à section de passage d'air pilotable 2 peuvent être en communication, en liaison filaire ou non filaire, avec le groupe de ventilation mécanique 14.

Le groupe de ventilation mécanique 14 peut également être appelé dispositif de ventilation centralisé ou encore groupe d'extraction mécanique.

Ici, ledit au moins un moyen d'évacuation d'air 12 comprend des bouches d'extraction d'air 15.

Les bouches d'extraction d'air 15 sont reliées de manière fluidique au groupe de ventilation mécanique 14 par un réseau d'extraction d'air comportant des conduites d'évacuation d'air 18.

Dans le cas où le système de ventilation 1 du bâtiment 21 comprend un groupe de ventilation mécanique 14, le groupe de ventilation mécanique 14 fait partie intégrante dudit au moins un moyen d'évacuation d'air 12.

Par ailleurs, dans le cas où le système de ventilation 1 du bâtiment 21 comprend les bouches d'extraction d'air 15, les bouches d'extraction d'air 15 font partie intégrante dudit au moins un moyen d'évacuation d'air 12.

Dans un mode de réalisation, l'unité de commande centrale 8 fait partie intégrante du groupe de ventilation mécanique 14.

Dans un autre mode de réalisation, le positionnement de l'unité de commande centrale 8 est quelconque et celle-ci peut être disposée en tout point du bâtiment 21, et, en particulier, être déportée par rapport au groupe de ventilation mécanique 14.

Dans le cas où l'unité de commande centrale 8 est déportée par rapport au groupe de ventilation mécanique 14, l'unité de commande centrale 8 peut communiquer avec le groupe de ventilation mécanique 14, et, préférentiellement, contrôler le groupe de ventilation mécanique 14, de sorte à réguler le débit d'air extérieur entrant dans le bâtiment 21 au travers des moyens d'entrée d'air à section de passage d'air pilotable 2.

L'unité de commande centrale 8 peut être reliée, en liaison filaire ou non filaire, avec le groupe de ventilation mécanique 14.

Dans un mode de réalisation, au moins une partie des moyens d'entrée d'air à section de passage d'air pilotable 2 comprennent respectivement au moins un ventilateur non représenté.

Ainsi, les moyens d'entrée d'air à section de passage d'air pilotable 2 comprenant respectivement au moins un ventilateur permettent de mettre en oeuvre une circulation d'air à l'intérieur du bâtiment 21 depuis les moyens d'entrée d'air à section de passage d'air pilotable 2 vers le ou les moyens d'évacuation d'air 12, de sorte à créer un renouvellement d'air dans l'ensemble des locaux secs et humides du bâtiment 21 au moyen d'un dispositif de ventilation réparti dans l'ensemble du bâtiment 21 tout en modulant le débit d'entrée d'air par les moyens d'entrée d'air à section de passage d'air pilotable 2.

Dans un tel cas où une partie ou la totalité des moyens d'entrée d'air à section de passage d'air pilotable 2 comprennent respectivement au moins un ventilateur, le système de ventilation 1 du bâtiment 21 peut être pourvu ou non du groupe de ventilation mécanique 14.

Dans un mode de réalisation, chaque moyen d'entrée d'air à section de passage d'air pilotable 2 comprend respectivement au moins un ventilateur.

Le système de ventilation 1 comprend, en outre, au moins un moyen d'entrée de données 17a, 17b, 17c, 17d, 22, 23 relatives à au moins un paramètre de l'environnement à l'intérieur du bâtiment 21, et/ou à au moins un paramètre de l'environnement à l'extérieur du bâtiment 21, et/ou à au moins une présence à l'intérieur du bâtiment 21.

Pratiquement, les données relatives à au moins un paramètre de l'environnement à l'intérieur du bâtiment 21, et/ou à au moins un paramètre de l'environnement à l'extérieur du bâtiment 21, et/ou à au moins une présence à l'intérieur du bâtiment 21 sont des données acquises par l'intermédiaire d'au moins un capteur 17a, 17b, 17c, 17d et/ou au travers d'une interface homme-machine 22, et/ou par l'intermédiaire d'un réseau de communication, en particulier un réseau internet pouvant être relié au serveur 23.

Dans un mode de réalisation, dans le cas où ledit au moins un moyen d'entrée de données est un capteur, en particulier un capteur de mesure d'un paramètre de l'air à l'intérieur du bâtiment 21, le capteur 17a est intégré dans un point de commande 9.

Dans un autre mode de réalisation, le positionnement du capteur, en particulier le capteur de mesure d'un paramètre de l'air à l'intérieur du bâtiment 21, est quelconque et celui-ci peut être disposé en tout point à l'intérieur du bâtiment 21, et en particulier être disposé contre une face interne d'une paroi 16 du bâtiment 21, ou contre une face interne d'un plafond du bâtiment 21 ou encore à l'intérieur d'un boîtier de l'interface homme-machine 22.

Préférentiellement, l'interface homme-machine 22 est un terminal mobile, en particulier une tablette tactile ou encore un téléphone intelligent.

L'interface homme-machine 22 est en communication avec l'unité de commande centrale 8, en particulier par une liaison sans fil, et/ou avec les unités de commande locales 9, et/ou avec les unités de contrôle électronique 6 et/ou avec le groupe de ventilation mécanique 14.

Les unités de contrôle électroniques 6 contrôlent électriquement l'ouverture et la fermeture des moyens d'entrée d'air à section de passage d'air pilotable 2 en fonction d'au moins une donnée d'entrée acquise par ledit au moins un moyen d'entrée de données 17a, 17b, 17c, 17d, 22, 23, de sorte à ajuster l'ouverture de la section de passage d'air des moyens d'entrée d'air à section de passage d'air pilotable 2.

Ainsi, le système de ventilation 1 du bâtiment 21 permet de commander électriquement des moyens d'entrée d'air à section de passage d'air pilotable 2 en fonction d'une ou plusieurs données relatives à au moins un paramètre de l'environnement à l'intérieur du bâtiment 21, et/ou à au moins un paramètre de l'environnement à l'extérieur du bâtiment 21, et/ou à au moins une présence à l'intérieur du bâtiment 21, de sorte à permettre un écoulement d'air entre l'extérieur et l'intérieur du bâtiment 21 au travers des moyens d'entrée d'air à section de passage d'air pilotable 2.

De cette manière, le système de ventilation 1 du bâtiment 21 permet d'améliorer la précision de la commande des moyens d'entrée d'air à section de passage d'air pilotable 2, de sorte à garantir une optimisation du renouvellement de l'air dans le bâtiment 21, et un maintien du niveau de qualité de l'air dans le bâtiment 21.

Dans un mode de réalisation préféré, ledit au moins un paramètre de l'environnement à l'intérieur du bâtiment 21 et ledit au moins un paramètre de l'environnement à l'extérieur du bâtiment 21 correspondent respectivement à au moins un paramètre de l'air à l'intérieur du bâtiment 21 et à au moins un paramètre de l'air à l'extérieur du bâtiment 21.

Dans un mode de réalisation, les moyens de commande 6, 8, 9 contrôlent les moyens d'entrée d'air à section de passage d'air pilotable 2 en fonctionnement binaire, où le passage d'un premier état de fonctionnement à un deuxième état de fonctionnement est fonction du franchissement d'une valeur seuil d'au moins un paramètre de l'environnement à l'intérieur du bâtiment 21, et/ou d'une valeur seuil d'au moins un paramètre de l'environnement à l'extérieur du bâtiment 21, et/ou en fonction d'une détection de présence à l'intérieur du bâtiment 21.

Ainsi, les moyens de commande contrôlent les moyens d'entrée d'air à section de passage d'air pilotable 2 soit en position ouverte soit en position fermée, notamment, par comparaison d'une valeur mesurée d'au moins un paramètre de l'environnement à l'intérieur du bâtiment 21 par un ou plusieurs capteurs 17a par rapport à une valeur seuil, et/ou par comparaison d'une valeur mesurée d'au moins un paramètre de l'environnement à l'extérieur du bâtiment 21 par un ou plusieurs capteurs 17c, 17d par rapport à une valeur seuil, et/ou par une détection de présence à l'intérieur du bâtiment 21 par un ou plusieurs capteurs 17b.

Dans un autre mode de réalisation, les moyens de commande 6, 8, 9 contrôlent les moyens d'entrée d'air à section de passage d'air pilotable 2 de manière corrélative, notamment de manière proportionnelle, par rapport à au moins une donnée relative à au moins un paramètre de l'environnement à l'intérieur du bâtiment 21, et/ou à au moins un paramètre de l'environnement à l'extérieur du bâtiment 21, et/ou à au moins une présence à l'intérieur du bâtiment 21.

Ainsi, les moyens de commande 6, 8, 9 contrôlent les moyens d'entrée d'air à section de passage d'air pilotable 2 entre une position ouverte et une position fermée, notamment, en fonction d'une valeur mesurée d'au moins un paramètre de l'environnement à l'intérieur du bâtiment 21 par un ou plusieurs capteurs 17a par rapport à une valeur seuil, et/ou par comparaison d'une valeur mesurée d'au moins un paramètre de l'environnement à l'extérieur du bâtiment 21 par un ou plusieurs capteurs 17c, 17d par rapport à une valeur seuil, et/ou par une détection de présence à l'intérieur du bâtiment 21 par un ou plusieurs capteurs 17b.

Le contrôle des moyens d'entrée d'air à section de passage d'air pilotable 2 par les moyens de commande 6, 8, 9 peut être mis en oeuvre suivant une loi, pouvant être, notamment, linéaire par rapport à au moins une donnée relative à au moins un paramètre de l'environnement à l'intérieur du bâtiment 21, et/ou à au moins un paramètre de l'environnement à l'extérieur du bâtiment 21, et/ou à au moins une présence à l'intérieur du bâtiment 21.

Le contrôle des moyens d'entrée d'air à section de passage d'air pilotable 6, 8, 9 entre une position ouverte et une position fermée par les moyens de commande peut être mis en oeuvre de manière discrète ou continue.

Les moyens de commande 6, 8, 9 peuvent ainsi contrôler les moyens d'entrée d'air à section de passage d'air pilotable 2 en fonction d'au moins une donnée relative à au moins un paramètre de l'environnement à l'intérieur du bâtiment 21, et/ou à au moins un paramètre de l'environnement à l'extérieur du bâtiment 21, et/ou à au moins une présence à l'intérieur du bâtiment 21, de sorte à contrôler les temps d'ouverture et de fermeture d'une section de passage d'air du conduit de circulation d'air 3 des moyens d'entrée d'air à section de passage d'air pilotable 2, ou encore à contrôler la dimension d'une section de passage d'air du conduit de circulation d'air 3 des moyens d'entrée d'air à section de passage d'air pilotable 2.

Avantageusement, les moyens de commande 6, 8, 9 contrôlent les moyens d'entrée d'air à section de passage d'air pilotable 2 en tout ou rien selon un signal de modulation de largeur d'impulsion.

Le signal de modulation de largeur d'impulsion est émis par l'unité de contrôle électronique 6 du moyen d'entrée d'air à section de passage d'air pilotable 2, et en particulier par le microcontrôleur de celle-ci.

Ici, le pilotage des moyens d'entrée d'air à section de passage d'air pilotable 2 en tout ou rien selon un signal de modulation de largeur d'impulsion est mis en oeuvre sur une période de l'ordre de 2 minutes à 10 minutes.

A titre d'exemple nullement limitatif, une ouverture des moyens d'entrée d'air à section de passage d'air pilotable 2 à une valeur de 50% sur une période de régulation de 10 minutes est obtenue en maintenant le volet d'obturation 5 du moyen d'entrée d'air à section de passage d'air pilotable 2 dans une position ouverte pendant une période équivalent à 5 minutes, et dans une position fermée pendant une période équivalent à 5 minutes.

La position fermée des moyens d'entrée d'air à section de passage d'air pilotable 2 peut être soit une position empêchant l'écoulement d'un flux d'air F au travers du conduit de circulation d'air 3 du moyen d'entrée d'air à section de passage d'air pilotable 2, ou encore une position permettant l'écoulement d'un flux d'air F minimal au travers du conduit de circulation d'air 3 du moyen d'entrée d'air à section de passage d'air pilotable 2.

Dans un mode de réalisation, où l'unité de commande centrale 8 communique avec les unités de contrôle électroniques 6, l'unité de commande centrale 8 commande les unités de contrôle électroniques 6 des moyens d'entrée d'air à section de passage d'air pilotable 2 en fonction de données relatives à au moins un paramètre de l'environnement à l'intérieur du bâtiment 21, et/ou à au moins un paramètre de l'environnement à l'extérieur du bâtiment 21, et/ou à au moins une présence à l'intérieur du bâtiment 21, de la position des moyens d'entrée d'air à section de passage d'air pilotable 2, et éventuellement en fonction de l'état de fonctionnement et de la vitesse de fonctionnement dudit au moins ventilateur 4, ou encore à partir des données provenant de bouches d'extraction d'air 15 pourvues d'une section de passage d'air pilotable.

Ainsi, l'unité de commande centrale 8 contrôle l'ouverture et la fermeture des moyens d'entrée d'air à section de passage d'air pilotable 2 en fonction de données relatives à au moins un paramètre de l'environnement à l'intérieur du bâtiment 21, et/ou à au moins un paramètre de l'environnement à l'extérieur du bâtiment 21, et/ou à au moins une présence à l'intérieur du bâtiment 21.

De manière avantageuse, l'unité de commande centrale 8 peut contrôler l'ouverture et la fermeture d'au moins l'un des moyens d'entrée d'air à section de passage d'air pilotable 2 en fonction de données relatives à au moins un paramètre de l'environnement à l'intérieur d'un local du bâtiment 21, où ledit au moins un moyen d'entrée d'air à section de passage d'air pilotable 2 est installé dans ledit local du bâtiment 21.

Dans un mode de réalisation, au moins une partie des unités de commande locales 9 comprennent respectivement un capteur 17a mesurant au moins un paramètre de l'environnement à l'intérieur du bâtiment 21.

Ainsi, les unités de commande locales 9 peuvent communiquer avec l'unité de commande centrale 8, et l'unité de commande centrale 8 peut commander les unités de contrôle électroniques 6 des moyens d'entrée d'air à section de passage d'air pilotable 2 en fonction de données provenant d'un ou plusieurs capteurs 17a mesurant au moins un paramètre de l'environnement à l'intérieur du bâtiment 21 et étant intégrés respectivement dans l'une des unités de commande locales 9.

Par ailleurs, les unités de commande locales 9 peuvent commander directement les unités de contrôle électroniques 6 des moyens d'entrée d'air à section de passage d'air pilotable 2 en fonction de données provenant d'un capteur 17a mesurant ledit au moins un paramètre de l'environnement à l'intérieur du bâtiment 21 et étant intégré dans l'une des unités de commande locales 9.

Dans un mode de réalisation, les données relatives à au moins un paramètre de l'air à l'intérieur du bâtiment 21 sont acquises par au moins un capteur 17a disposé à l'intérieur du bâtiment 21, où ledit au moins un capteur 17a mesure au moins un paramètre de l'air à l'intérieur du bâtiment 21.

Ainsi, un tel système de ventilation 1 du bâtiment 21 permet de commander des moyens d'entrée d'air à section de passage d'air pilotable 2 de manière fiable et sans influence d'un ou plusieurs paramètres de l'air extérieur au bâtiment 21 sur la ou les mesures mises en oeuvre par le ou les capteurs 17a mesurant au moins un paramètre de l'air à l'intérieur du bâtiment 21.

De cette manière, les unités de contrôle électroniques 6 contrôlent électriquement l'ouverture et la fermeture des moyens d'entrée d'air à section de passage d'air pilotable 2 en fonction d'au moins une mesure mise en oeuvre par au moins un capteur 17a, en particulier associé à un point de commande 9, déterminant au moins un paramètre de l'air à l'intérieur du bâtiment 21, en particulier un niveau d'humidité de l'air ambiant à l'intérieur du bâtiment 21.

A titre d'exemples nullement limitatifs, ledit au moins un paramètre de l'air mesuré par le ou les capteurs 17a à l'intérieur du bâtiment 21 est le dioxyde de carbone, l'humidité, la température, ou un composé organique volatile.

Pratiquement, lorsque les moyens de commande 6, 8, 9 comprennent l'unité de commande centrale 8, l'unité de commande centrale 8 permet de contrôler l'ouverture et la fermeture des moyens d'entrée d'air à débit d'air pilotable 2 en fonction d'au moins une mesure dudit au moins un paramètre de l'air à l'intérieur du bâtiment 21 mise en oeuvre par ledit au moins un capteur 17a.

Préférentiellement, l'activation de l'une des unités de commande locales 9 par l'utilisateur est prioritaire par rapport à l'unité de commande centrale 8, de sorte à contrôler l'ouverture ou la fermeture d'au moins l'un des moyens d'entrée d'air à section de passage d'air pilotable 2.

Ainsi, l'activation de l'une des unités de commande locales 9 commande directement au moins l'une des unités de contrôle électroniques 6 des moyens d'entrée d'air à section de passage d'air pilotable 2 en fonction d'une sélection par l'utilisateur, et en inhibant un ordre de commande pouvant être émis par une unité de commande centrale 8 ou en ignorant une valeur mesurée par un capteur 17a, 17b, 17c mesurant au moins un paramètre de l'environnement à l'intérieur du bâtiment 21 ou à l'extérieur du bâtiment 21, ou une détection de présence à l'intérieur du bâtiment 21.

Dans un mode de réalisation, ledit au moins un local sec 19 du bâtiment 21 comprend au moins un capteur 17a mesurant au moins un paramètre de l'environnement à l'intérieur dudit au moins un local sec 19.

Ainsi, les moyens de commande 6, 8, 9 commandent les moyens d'entrée d'air à section de passage d'air pilotable 2 au moins en fonction de données provenant du ou des capteurs 17a mesurant ledit au moins un paramètre de l'environnement à l'intérieur du ou des locaux secs 19 du bâtiment 21.

En outre, les unités de contrôle électroniques 6 peuvent commander les moyens d'entrée d'air à section de passage d'air pilotable 2 en fonction de données relatives à au moins un paramètre de l'environnement à l'intérieur du ou des locaux secs 19 du bâtiment 21 en combinaison de données relatives à au moins un paramètre de l'environnement à l'extérieur du bâtiment 21 et/ou à au moins une présence à l'intérieur du bâtiment 21.

Dans un tel cas, ledit au moins un local sec 19 du bâtiment 21 comprend, de préférence, au moins un moyen d'entrée d'air à section de passage d'air pilotable 2.

Avantageusement, ledit au moins un local humide 20 comprend également au moins un capteur 17a mesurant ledit au moins un paramètre de l'environnement à l'intérieur dudit au moins un local humide 20.

Les moyens de commande 6, 8, 9 contrôlent l'ouverture et la fermeture des moyens d'entrée d'air à section de passage d'air pilotable 2, en outre, en fonction dudit au moins un capteur 17a disposé dans ledit au moins un local humide 20.

Ainsi, les moyens de commande 6, 8, 9 commandent les moyens d'entrée d'air à 17 section de passage d'air pilotable 2 en fonction de données provenant des capteurs 17a mesurant ledit au moins un paramètre de l'environnement à l'intérieur du ou des locaux secs 19 du bâtiment 21 et du ou des locaux humides 20 du bâtiment 21.

En outre, les unités de contrôle électroniques 6 peuvent commander les moyens d'entrée d'air à section de passage d'air pilotable 2 en fonction de données relatives à au moins un paramètre de l'environnement à l'intérieur du ou des locaux secs 19 du bâtiment 21 et du ou des locaux humides 20 du bâtiment 21 en combinaison de données relatives à au moins un paramètre de l'environnement à l'extérieur du bâtiment 21 et/ou à au moins une présence à l'intérieur du bâtiment 21.

Dans un mode de réalisation, les moyens de commande 6, 8, 9 contrôlent l'ouverture et la fermeture des moyens d'entrée d'air à section de passage d'air pilotable 2 en fonction d'au moins un paramètre de l'environnement à l'intérieur du bâtiment 21 et d'au moins un paramètre de l'environnement à l'extérieur du bâtiment 21.

Ainsi, les moyens de commande 6, 8, 9 commandent les moyens d'entrée d'air à section de passage d'air pilotable 2 en fonction de données relatives à au moins un paramètre de l'environnement à l'intérieur du bâtiment 21 et de données relatives à au moins un paramètre de l'environnement à l'extérieur du bâtiment 21.

Les données relatives à au moins un paramètre de l'environnement à l'extérieur du bâtiment 21 peuvent provenir, notamment, d'au moins un capteur 17d disposé à l'extérieur du bâtiment 21, pouvant mesurer au moins un paramètre de l'air à l'extérieur du bâtiment, ou encore par la connexion des moyens de commande 6, 8, 9 au serveur 23 permettant de récupérer des données météorologiques, pouvant être instantanées ou prévisionnelles, en particulier, depuis un site internet.

Les données relatives à au moins un paramètre de l'environnement à l'extérieur du bâtiment 21 peuvent être, notamment, la température et/ou l'hygrométrie de l'air extérieur, le taux de particules ou la concentration d'un polluant présent dans l'air extérieur, et/ou la vitesse du vent.

Dans un mode de réalisation, le système de ventilation 1 du bâtiment 21 comprend également au moins un capteur de présence 17b disposé dans le bâtiment 21, où les moyens de commande 6, 8, 9 contrôlent l'ouverture et la fermeture des moyens d'entrée d'air à section de passage d'air pilotable 2 en fonction dudit au moins un capteur de présence 17b.

Ainsi, les moyens de commande 6, 8, 9 commandent les moyens d'entrée d'air à section de passage d'air pilotable 2 en fonction de la détection d'une présence à l'intérieur du bâtiment 21, et, en particulier, de manière prioritaire par rapport à une valeur mesurée par un ou plusieurs capteurs 17a mesurant au moins un paramètre de l'environnement à l'intérieur du bâtiment 21.

Préférentiellement, les moyens de commande 6, 8, 9 contrôlent l'ouverture d'au moins l'un des moyens d'entrée d'air à section de passage d'air pilotable 2 pendant une période de temps prédéterminée, suite à la détection d'une présence par ledit au moins un capteur de présence 17b.

Ainsi, les moyens de commande 6, 8, 9 commandent l'ouverture d'au moins l'un des moyens d'entrée d'air à section de passage d'air pilotable 2 pendant une période de temps prédéterminée, suite à la détection d'une présence à l'intérieur du bâtiment 21, de sorte à garantir un renouvellement d'air dans le bâtiment 21 lors de l'arrivée d'une personne dans le bâtiment, ou dans l'un des locaux 19, 20 du bâtiment 21.

Dans un mode de réalisation, au moins une partie des moyens d'entrée d'air à section de passage d'air pilotable 2 comportent respectivement un capteur 17c mesurant au moins un paramètre de l'air traversant le moyen d'entrée d'air à section de passage d'air pilotable 2 correspondant, où les moyens de commande 6, 8, 9 contrôlent l'ouverture et la fermeture des moyens d'entrée d'air à section de passage d'air pilotable 2 en fonction d'au moins un paramètre de l'air traversant lesdits moyens d'entrée d'air à section de passage d'air pilotable 2.

Ainsi, les moyens de commande 6, 8, 9 commandent les moyens d'entrée d'air à section de passage d'air pilotable 2 en fonction du ou des capteurs 17c mesurant ledit au moins un paramètre de l'air traversant le ou les moyens d'entrée d'air à section de passage d'air pilotable 2 équipés d'un tel capteur 17c, et, éventuellement, en fonction de données provenant d'un ou plusieurs capteurs 17a mesurant au moins un paramètre de l'environnement à l'intérieur du bâtiment.

Le capteur 17c mesurant au moins un paramètre de l'air traversant le moyen d'entrée d'air à section de passage d'air pilotable 2 peut être disposé à l'intérieur du conduit de circulation d'air 3, ou encore à proximité de l'ouverture d'entrée d'air 3a ou de l'ouverture de sortie d'air 3b ménagées respectivement à une extrémité du conduit de circulation d'air 3.

Avantageusement, le capteur 17c du moyen d'entrée d'air à section de passage d'air pilotable 2 mesurant ledit au moins un paramètre de l'air traversant ledit moyen d'entrée d'air à section de passage d'air pilotable 2 est un capteur de débit d'air, ou un capteur de température, ou un capteur de détection de particules présentes dans l'air extérieur.

Dans le cas où le capteur 17c du moyen d'entrée d'air à section de passage d'air pilotable 2 mesurant ledit au moins un paramètre de l'air traversant ledit moyen d'entrée d'air à section de passage d'air pilotable 2 est un capteur de détection de particules présentes dans l'air extérieur ou de détection d'une concentration d'un polluant présent dans l'air extérieur, les moyens de commande 6, 8, 9 commandent les moyens d'entrée d'air à section de passage d'air pilotable 2 en fonction de données relatives à la quantité et à la nature des particules présentes dans l'air extérieur au bâtiment 21 ou de la concentration du polluant présent dans l'air extérieur au bâtiment 21, de sorte à limiter l'entrée d'air depuis l'extérieur du bâtiment 21 vers l'intérieur du bâtiment 21 au travers des moyens d'entrée d'air à section de passage d'air pilotable 2 lors du franchissement d'un seuil prédéterminé.

Dans le cas où le capteur 17c du moyen d'entrée d'air à section de passage d'air pilotable 2 mesurant ledit au moins un paramètre de l'air traversant ledit moyen d'entrée d'air à section de passage d'air pilotable 2 est un capteur de température, les moyens de commande 6, 8, 9 commandent les moyens d'entrée d'air à section de passage d'air pilotable 2 en fonction de données relatives à la température de l'air extérieur au bâtiment 21, de sorte à limiter l'entrée d'air depuis l'extérieur du bâtiment 21 vers l'intérieur du bâtiment 21 au travers des moyens d'entrée d'air à section de passage d'air pilotable 2 lors du franchissement d'un seuil maximal prédéterminé ou lors du franchissement d'un seuil minimal prédéterminé.

Dans le cas où le capteur 17c du moyen d'entrée d'air à section de passage d'air pilotable 2 mesurant ledit au moins un paramètre de l'air traversant ledit moyen d'entrée d'air à section de passage d'air pilotable 2 est un capteur d'hygrométrie, les moyens de commande 6, 8, 9 commandent les moyens d'entrée d'air à section de passage d'air pilotable 2 en fonction de données relatives à l'humidité de l'air extérieur au bâtiment 21, de sorte à limiter l'entrée d'air depuis l'extérieur du bâtiment 21 vers l'intérieur du bâtiment 21 au travers des moyens d'entrée d'air à section de passage d'air pilotable 2 lors du franchissement d'un seuil maximal prédéterminé.

Dans un mode de réalisation, le système de ventilation 1 du bâtiment 21 comprend également d'autres moyens, non représentés, d'entrée d'air à section de passage d'air fixe, auto-réglable ou hygroréglable.

Dans un mode de réalisation, les moyens de commande 6, 8, 9 contrôlent l'ouverture et la fermeture des moyens d'entrée d'air à section de passage d'air pilotable 2 en fonction d'un débit d'air moyen prédéterminé pour les moyens d'entrée d'air à section de passage d'air fixe, auto-réglable ou hygroréglable.

Ainsi, les moyens de commande 6, 8, 9 permettent de commander une partie des moyens d'entrée d'air du bâtiment 21 et tout en permettant l'utilisation de moyens d'entrée d'air ayant un débit d'air fixe, auto-réglable ou hygroréglable, de sorte à minimiser le coût de mise en oeuvre du système de ventilation 1, et/ou à limiter les coûts de remplacement des moyens d'entrée d'air lors de la rénovation du bâtiment 21, en particulier par le passage d'un dispositif de raccordement électrique non présent.

De cette manière, les moyens de commande 6, 8, 9 permettent de commander les moyens d'entrée d'air à section de passage d'air pilotable 2 en fonction de données prédéterminées relatives aux moyens d'entrée d'air ayant un débit d'air fixe, auto-réglable ou hygroréglable, pouvant être fournies, notamment, par le fabricant de ceux-ci, ou suite à une modélisation du bâtiment 21, ou encore suite à un apprentissage mis en oeuvre sur une période de temps de test du bâtiment 21.

Dans ce cas, les moyens d'entrée d'air à section de passage d'air pilotable 2 sont contrôlés, en outre, en fonction de données dépendantes de moyens d'entrée d'air ayant une section de passage d'air fixe ou ayant une section de passage d'air pilotée par un organe sensible à un paramètre de l'environnement à l'intérieur et/ou à l'extérieur du bâtiment 21.

Un tel cas permet de prendre en considération les habitats où les moyens d'entrée d'air sont de différents types et d'avoir une gestion globale en fonction de ceux-ci.

A titres d'exemples nullement limitatifs, les moyens d'entrée d'air à débit d'air fixe peuvent être des trappes d'entrée d'air ayant un débit d'air fixe, c'est-à-dire comportant un trou calibré, ou autrement dit sans moyen de modulation du débit d'air, ou encore des fuites d'air, pouvant être calibrées lors d'une modélisation du bâtiment 21.

Les moyens d'entrée d'air à débit d'air auto-réglable peuvent être des trappes d'entrée d'air régulées de manière autonome sur une certaine plage de pression de l'air.

Et les moyens d'entrée d'air à débit d'air hygroréglable peuvent être des trappes d'entrée d'air commandées mécaniquement au moyen d'un organe sensible à l'humidité.

Le système de ventilation 1 du bâtiment 21 étant équipé, d'une part, de moyens d'entrée d'air à section de passage d'air pilotable 2 et, d'autre part, de moyens d'entrée d'air à débit d'air fixe ou auto-réglable, il permet de minimiser le coût de réalisation du système de ventilation 1 en limitant le nombre de moyens d'entrée d'air à section de passage d'air pilotable 2, en particulier lors de la rénovation du bâtiment 21.

Grâce à la présente invention, le système de ventilation du bâtiment permet de commander électriquement des moyens d'entrée d'air à section de passage d'air pilotable en fonction d'une ou plusieurs données relatives à au moins un paramètre de l'environnement à l'intérieur du bâtiment, et/ou à au moins un paramètre de l'environnement à l'extérieur du bâtiment, et/ou à au moins une présence à l'intérieur du bâtiment, de sorte à permettre un écoulement d'air entre l'extérieur et l'intérieur du bâtiment au travers des moyens d'entrée d'air à section de passage d'air pilotable.

De cette manière, un tel système de ventilation du bâtiment permet d'améliorer la précision de la commande des moyens d'entrée d'air à section de passage d'air pilotable, de sorte à garantir une optimisation du renouvellement de l'air dans le bâtiment, et un maintien du niveau de qualité de l'air dans le bâtiment.

De nombreuses modifications peuvent être apportées aux exemples de réalisation décrits précédemment sans sortir du cadre de l'invention.

En outre, les modes de réalisation et variantes envisagés peuvent être combinés pour générer de nouveaux modes de réalisation de l'invention.

## Revendications

1. Système de ventilation (1) d'un bâtiment (21) comprenant :
- des moyens d'entrée d'air à section de passage d'air pilotable (2), où un flux d'air (F) s'écoule depuis l'extérieur vers l'intérieur du bâtiment (21) au travers de chacun des moyens d'entrée d'air à section de passage d'air pilotable (2),
- au moins un moyen d'évacuation d'air (12),
- des moyens de commande (6, 8, 9) coopérant avec les moyens d'entrée d'air à section de passage d'air pilotable (2), où les moyens de commande (6, 8, 9) contrôlent l'ouverture et la fermeture des moyens d'entrée d'air à section de passage d'air pilotable (2),
- au moins un moyen d'entrée de données (17a, 17b, 17c, 17d, 22, 23) relatives à au moins un paramètre de l'environnement à l'intérieur du bâtiment (21), et/ou à au moins un paramètre de l'environnement à l'extérieur du bâtiment (21), et/ou à au moins une présence à l'intérieur du bâtiment (21), acquises par l'intermédiaire d'au moins un capteur (17a, 17b, 17c, 17d) et/ou au travers d'une interface homme-machine (22) et/ou par l'intermédiaire d'un réseau de communication,
dans lequel
∘ les moyens de commande (6, 8, 9) comprennent des unités de contrôle électroniques (6),
∘ les unités de contrôle électroniques (6) contrôlent électriquement l'ouverture et la fermeture des moyens d'entrée d'air à section de passage d'air pilotable (2) en fonction d'au moins une donnée d'entrée acquise par ledit au moins un moyen d'entrée de données (17a, 17b, 17c, 17d, 22, 23), de sorte à ajuster l'ouverture de la section de passage d'air des moyens d'entrée d'air à section de passage d'air pilotable (2),
∘ chaque moyen d'entrée d'air à section de passage d'air pilotable (2) est disposé au niveau d'une paroi (16) du bâtiment (21), de sorte à créer une communication fluidique directe entre l'extérieur et l'intérieur du bâtiment (21),
∘ les moyens de commande (6, 8, 9) comprennent également une unité de commande centrale (8), qui communique avec les unités de contrôle électroniques (6), et des unités de commande locales (9), qui
communiquent avec les unités de contrôle électroniques (6), **caractérisé en ce que** l'activation de l'une des unités de commande locales (9) par l'utilisateur est prioritaire par rapport à l'unité de commande centrale (8), de sorte à contrôler l'ouverture ou la fermeture d'au moins l'un des moyens d'entrée d'air à section de passage d'air pilotable (2),
et **en ce que** l'activation de l'une des unités de commande locales (9) commande directement au moins l'une des unités de contrôle électroniques (6) des moyens d'entrée d'air à section de passage d'air pilotable (2) en fonction d'une sélection par l'utilisateur, et en inhibant un ordre de commande émis par l'unité de commande centrale (8) ou en ignorant une donnée provenant du capteur (17a, 17b, 17c, 17d) du moyen d'entrée de données (17a, 17b, 17c, 17d, 22, 23).

2. Système de ventilation (1) d'un bâtiment (21) selon la revendication 1, **caractérisé en ce que** ledit système de ventilation (1) comprend également au moins un ventilateur (4), ledit au moins un ventilateur (4) mettant en circulation l'air depuis les moyens d'entrée d'air à section de passage d'air pilotable (2) vers ledit au moins un moyen d'évacuation d'air (12).

3. Système de ventilation (1) d'un bâtiment (21) selon la revendication 2, **caractérisé en ce que** ledit au moins un ventilateur (4) fait partie intégrante d'un groupe de ventilation mécanique (14), et **en ce que** ledit au moins un moyen d'évacuation d'air (12) comprend des bouches d'extraction d'air (15), où les bouches d'extraction d'air (15) sont reliées de manière fluidique au groupe de ventilation mécanique (14) par un réseau d'extraction d'air comportant des conduites d'évacuation d'air (18).

4. Système de ventilation (1) d'un bâtiment (21) selon la revendication 2 ou la revendication 3, **caractérisé en ce qu'**au moins une partie des moyens d'entrée d'air à section de passage d'air pilotable (2) comprennent respectivement au moins un ventilateur.

5. Système de ventilation (1) d'un bâtiment (21) selon l'une quelconque des revendications 1 à 4, **caractérisé en ce que** le bâtiment (21) comprend au moins un local sec (19) et au moins un local humide (20), et **en ce que** ledit au moins un local sec (19) comprend au moins un capteur (17a) mesurant au moins un paramètre de l'environnement à l'intérieur dudit au moins un local sec (19), le capteur (17a) faisant partie du moyen d'entrée de données (17a, 17b, 17c, 17d, 22, 23).

6. Système de ventilation (1) d'un bâtiment (21) selon la revendication 5, **caractérisé en ce que** ledit au moins un local humide (20) comprend également au moins un capteur (17a) mesurant ledit au moins un paramètre de l'environnement à l'intérieur dudit au moins un local humide (20), le capteur (17a) faisant partie du moyen d'entrée de données (17a, 17b, 17c, 17d, 22, 23).

7. Système de ventilation (1) d'un bâtiment (21) selon l'une quelconque des revendications 1 à 6, **caractérisé en ce que** ledit système (1) comprend au moins un capteur de présence (17b) disposé dans le bâtiment (21), où les moyens de commande (6, 8, 9) contrôlent l'ouverture et la fermeture des moyens d'entrée d'air à section de passage d'air pilotable (2) en fonction du capteur de présence (17b), le capteur de présence (17b) faisant partie du moyen d'entrée de données (17a, 17b, 17c, 17d, 22, 23).

8. Système de ventilation (1) d'un bâtiment (21) selon la revendication 7, **caractérisé en ce que** les moyens de commande (6, 8, 9) contrôlent l'ouverture d'au moins l'un des moyens d'entrée d'air à section de passage d'air pilotable (2) pendant une période de temps prédéterminée, suite à la détection d'une présence par ledit au moins un capteur de présence (17b).

9. Système de ventilation (1) d'un bâtiment (21) selon l'une quelconque des revendications 1 à 8, **caractérisé en ce qu'**au moins une partie des moyens d'entrée d'air à section de passage d'air pilotable (2) comportent respectivement un capteur (17c) mesurant au moins un paramètre de l'air traversant le moyen d'entrée d'air à section de passage d'air pilotable (2) correspondant, le capteur (17c) faisant partie du moyen d'entrée de données (17a, 17b, 17c, 17d, 22, 23), et **en ce que** les moyens de commande (6, 8, 9) contrôlent l'ouverture et la fermeture des moyens d'entrée d'air à section de passage d'air pilotable (2) en fonction d'au moins un paramètre de l'air traversant lesdits moyens d'entrée d'air à section de passage d'air pilotable (2).

10. Système de ventilation (1) d'un bâtiment (21) selon l'une quelconque des revendications 1 à 9, **caractérisé en ce que** ledit système (1) comprend également des moyens d'entrée d'air à section de passage d'air fixe, auto-réglable ou hygroréglable, différents des moyens d'entrée d'air à section de passage d'air pilotable (2).

11. Système de ventilation (1) d'un bâtiment (21) selon l'une quelconque des revendications 1 à 10, **caractérisé en ce que** les moyens de commande (6, 8, 9) contrôlent les moyens d'entrée d'air à section de passage d'air pilotable (2) en fonctionnement binaire, où le passage d'un premier état de fonctionnement à un deuxième état de fonctionnement est fonction du franchissement d'une valeur seuil du paramètre de l'environnement à l'intérieur du bâtiment (21) et/ou d'une valeur seuil du paramètre de l'environnement à l'extérieur du bâtiment (21) et/ou en fonction de la détection de présence à l'intérieur du bâtiment (21).

12. Système de ventilation (1) d'un bâtiment (21) selon l'une quelconque des revendications 1 à 10, **caractérisé en ce que** les moyens de commande (6, 8, 9) contrôlent les moyens d'entrée d'air à section de passage d'air pilotable (2) de manière corrélative par rapport à au moins une donnée relative au paramètre de l'environnement à l'intérieur du bâtiment (21) et/ou au paramètre de l'environnement à l'extérieur du bâtiment (21) et/ou à la présence à l'intérieur du bâtiment (21).

13. Système de ventilation (1) d'un bâtiment (21) selon l'une quelconque des revendications 1 à 12, **caractérisé en ce que** les moyens d'entrée d'air à section de passage d'air pilotable (2) sont des trappes d'entrée d'air actionnées électriquement, et en particulier motorisées, où chaque trappe d'entrée d'air comprend au moins un volet d'obturation (5) d'un conduit de circulation d'air (3) ménagé dans un corps de ladite trappe.

## Patentansprüche

1. Belüftungssystem (1) für ein Gebäude (21), umfassend:
- Lufteintrittseinrichtungen (2) mit regelbarem Luftdurchtrittsquerschnitt, wobei ein Luftstrom (F) vom Äußeren zum Inneren des Gebäudes (21) durch jede der Lufteintrittseinrichtungen (2) mit regelbarem Luftdurchtrittsquerschnitt strömt,
- mindestens eine Luftausleiteinrichtung (12),
- Steuereinrichtungen (6, 8, 9), die mit den Lufteintrittseinrichtungen (2) mit regelbarem Luftdurchtrittsquerschnitt zusammenwirken, wobei die Steuereinrichtungen (6, 8, 9) das Öffnen und Schließen der Lufteintrittseinrichtungen (2) mit regelbarem Luftdurchtrittsquerschnitt ansteuern,
- mindestens eine Eingabeeinrichtung (17a, 17b, 17c, 17d, 22, 23) für Daten, die sich auf mindestens einen Parameter des Umfelds im Inneren des Gebäudes (21) und/oder mindestens einen Parameter des Umfelds außerhalb des Gehäuses (21) und/oder mindestens eine Anwesenheit im Inneren des Gehäuses (21) beziehen, die mittels mindestens eines Sensors (17a, 17b, 17c, 17d) und/oder über eine Mensch-Maschine-Schnittstelle (22) und/oder mittels eines Kommunikationsnetzes erfasst werden,
wobei
∘ die Steuereinrichtungen (6, 8, 9) elektronische Ansteuerungseinheiten (6) umfassen,
∘ die elektronischen Ansteuerungseinheiten (6) elektrisch das Öffnen und Schließen der Lufteintrittseinrichtungen (2) mit regelbarem Luftdurchtrittsquerschnitt in Abhängigkeit von mindestens einem Eingabedatenelement ansteuern, das mittels der mindestens einen Dateneingabeeinrichtung (17a, 17b, 17c, 17d, 22, 23) erfasst wurde, um das Öffnen des Luftdurchtrittsquerschnitts der Lufteintrittseinrichtungen (2) mit regelbarem Luftdurchtrittsquerschnitt einzustellen,
∘ jede Lufteintrittseinrichtung (2) mit regelbarem Luftdurchtrittsquerschnitt im Bereich einer Wand (16) des Gebäudes (21) angeordnet ist, um eine direkte Fluidverbindung zwischen dem Äußeren und dem Inneren des Gebäudes (21) herzustellen,
o die Steuereinrichtungen (6, 8, 9) auch eine zentrale Steuereinheit (8), die mit den elektronischen Ansteuerungseinheiten (6) kommuniziert, und lokale Steuereinheiten (9) umfassen, die mit den elektronischen Ansteuerungseinheiten (6) kommunizieren,
**dadurch gekennzeichnet, dass** die Aktivierung einer der lokalen Steuereinheiten (9) durch den Nutzer Vorrang in Bezug auf die zentrale Steuereinheit (8) hat, um das Öffnen oder Schließen mindestens einer der Lufteintrittseinrichtungen (2) mit regelbarem Luftdurchtrittsquerschnitt anzusteuern,
und dass die Aktivierung einer der lokalen Steuereinheiten (9) mindestens eine der elektronischen Ansteuerungseinheiten (6) der Lufteintrittseinrichtungen (2) mit regelbarem Luftdurchtrittsquerschnitt in Abhängigkeit von einer Auswahl durch den Nutzer direkt ansteuert, indem ein von der zentralen Steuereinheit (8) ausgegebener Steuerbefehl verhindert wird oder indem ein vom Sensor (17a, 17b, 17c, 17d) der Dateneingabeeinrichtung (17a, 17b, 17c, 17d, 22, 23) kommendes Datenelement ignoriert wird.

2. Belüftungssystem (1) für ein Gebäude (21) nach Anspruch 1, **dadurch gekennzeichnet, dass** das Belüftungssystem (1) auch mindestens einen Ventilator (4) umfasst, wobei der mindestens eine Ventilator (4) die Luft aus den Lufteintrittseinrichtungen (2) mit regelbarem Luftdurchtrittsquerschnitt in Zirkulation zu der mindestens eine Luftausleiteinrichtung (12) versetzt.

3. Belüftungssystem (1) für ein Gebäude (21) nach Anspruch 2, **dadurch gekennzeichnet, dass** der mindestens eine Ventilator (4) einen integralen Bestandteil eines mechanischen Belüftungsaggregats (14) bildet, und dass die mindestens eine Luftausleiteinrichtung (12) Luftabzugsöffnungen (15) umfasst, wobei die Luftabzugsöffnungen (15) über ein Abluftleitungen (18) umfassendes Luftabzugsnetz fluidtechnisch mit dem mechanischen Belüftungsaggregat (14) verbunden ist.

4. Belüftungssystem (1) für ein Gebäude (21) nach Anspruch 2 oder Anspruch 3, **dadurch gekennzeichnet, dass** zumindest ein Teil der Lufteintrittseinrichtungen (2) mit regelbarem Luftdurchtrittsquerschnitt jeweils mindestens einen Ventilator umfasst.

5. Belüftungssystem (1) für ein Gebäude (21) nach einem der Ansprüche 1 bis 4, **dadurch gekennzeichnet, dass** das Gebäude (21) mindestens eine trockene Örtlichkeit (19) und mindestens eine feuchte Örtlichkeit (20) umfasst, und dass die mindestens eine trockene Örtlichkeit (19) mindestens einen Sensor (17a) umfasst, der mindestens einen Parameter des Umfelds im Inneren der mindestens einen trockenen Örtlichkeit (19) misst, wobei der Sensor (17a) einen Teil der Dateneingabeeinrichtungen (17a, 17b, 17c, 17d, 22, 23) bildet.

6. Belüftungssystem (1) für ein Gebäude (21) nach Anspruch 5, **dadurch gekennzeichnet, dass** die mindestens eine feuchte Örtlichkeit (2) ebenfalls mindestens einen Sensor (17a) umfasst, der den mindestens einen Parameter des Umfelds im Inneren der mindestens einen feuchten Örtlichkeit (20) misst, wobei der Sensor (17a) einen Teil der Dateneingabeeinrichtungen (17a, 17b, 17c, 17d, 22, 23) bildet.

7. Belüftungssystem (1) für ein Gebäude (21) nach einem der Ansprüche 1 bis 6, **dadurch gekennzeichnet, dass** das System (1) mindestens einen Anwesenheitssensor (17b) umfasst, der in dem Gebäude (21) angeordnet ist, wobei die Steuereinrichtungen (6, 8, 9) das Öffnen und Schließen der Lufteintrittseinrichtungen (2) mit regelbarem Luftdurchtrittsquerschnitt in Abhängigkeit vom Anwesenheitssensor (17b) ansteuern, wobei der Anwesenheitssensor (17b) einen Teil der Dateneingabeeinrichtungen (17a, 17b, 17c, 17d, 22, 23) bildet.

8. Belüftungssystem (1) für ein Gebäude (21) nach Anspruch 7, **dadurch gekennzeichnet, dass** die Steuereinrichtungen (6, 8, 9) das Öffnen und Schließen der Lufteintrittseinrichtungen (2) mit regelbarem Luftdurchtrittsquerschnitt während eines vorbestimmten Zeitraums infolge der Erfassung einer Anwesenheit durch den mindestens einen Anwesenheitssensor (17b) ansteuern.

9. Belüftungssystem (1) für ein Gebäude (21) nach einem der Ansprüche 1 bis 8, **dadurch gekennzeichnet, dass** zumindest ein Teil der Lufteintrittseinrichtungen (2) mit regelbarem Luftdurchtrittsquerschnitt jeweils einen Sensor (17c) umfasst, der mindestens einen Parameter der die entsprechende Lufteintrittseinrichtung (2) mit regelbarem Luftdurchtrittsquerschnitt durchströmenden Luft misst, wobei der Sensor (17c) einen Teil der Dateneingabeeinrichtungen (17a, 17b, 17c, 17d, 22, 23) bildet, und dass die Steuereinrichtungen (6, 8, 9) das Öffnen und Schließen der Lufteintrittseinrichtungen (2) mit regelbarem Luftdurchtrittsquerschnitt in Abhängigkeit von mindestens einem Parameter der die Lufteintrittseinrichtungen (2) mit regelbarem Luftdurchtrittsquerschnitt durchströmenden Luft ansteuert.

10. Belüftungssystem (1) für ein Gebäude (21) nach einem der Ansprüche 1 bis 9, **dadurch gekennzeichnet, dass** das System (1) ebenfalls Lufteintrittseinrichtungen mit festem, selbstregelbarem oder feuchteregelbarem Luftdurchtrittsquerschnitt umfasst, die sich von den Lufteintrittseinrichtungen (2) mit regelbarem Luftdurchtrittsquerschnitt unterscheiden.

11. Belüftungssystem (1) für ein Gebäude (21) nach einem der Ansprüche 1 bis 10, **dadurch gekennzeichnet, dass** die Steuereinrichtungen (6, 8, 9) die Lufteintrittseinrichtungen (2) mit regelbarem Luftdurchtrittsquerschnitt in Binärbetrieb ansteuern, wobei der Übergang von einem ersten Betriebszustand zu einem zweiten Betriebszustand vom Überschreiten eines Schwellenwerts des Parameters des Umfelds innerhalb des Gebäudes (21) und/oder eines Schwellenwerts des Parameters des Umfelds außerhalb des Gebäudes (21) und/oder in Abhängigkeit von der Erfassung einer Anwesenheit im Inneren des Gebäudes (21) abhängt.

12. Belüftungssystem (1) für ein Gebäude (21) nach einem der Ansprüche 1 bis 10, **dadurch gekennzeichnet, dass** die Steuereinrichtungen (6, 8, 9) die Lufteintrittseinrichtungen (2) mit regelbarem Luftdurchtrittsquerschnitt in Bezug auf mindestens ein Datenelement korrelativ ansteuern, das sich auf den Parameter des Umfelds innerhalb des Gebäudes (21) und/oder den Parameter des Umfelds außerhalb des Gebäudes (21) und/oder die Anwesenheit im Inneren des Gebäudes (21) bezieht.

13. Belüftungssystem (1) für ein Gebäude (21) nach einem der Ansprüche 1 bis 12, **dadurch gekennzeichnet, dass** die Lufteintrittseinrichtungen (2) mit regelbarem Luftdurchtrittsquerschnitt elektrisch betriebene und insbesondere motorbetriebene Zuluftklappen sind, wobei jede Zuluftklappe mindestens einen Verschlussdeckel (5) für einen Luftzirkulationskanal (3) umfasst, der in einem Körper der Klappe ausgebildet ist.

## Claims

1. Ventilation system (1) for a building (21), comprising:
- air inlet means with a controllable air passage cross-section (2), wherein an air stream (F) flows from the outside to the inside of the building (21) through each of the air inlet means with a controllable air passage cross-section (2),
- at least one air evacuation means (12),
- control means (6, 8, 9) which cooperate with the air inlet means with a controllable air passage cross-section (2), wherein the control means (6, 8, 9) control the opening and closing of the air inlet means with a controllable air passage cross-section (2),
- at least one data input means (17a, 17b, 17c, 17d, 22, 23) for data relating to at least one parameter of the environment inside the building (21) and/or to at least one parameter of the environment outside the building (21) and/or to at least one presence inside the building (21), which data are acquired by way of at least one sensor (17a, 17b, 17c, 17d) and/or through a man-machine interface (22) and/or by way of a communication network,
wherein
∘ the control means (6, 8, 9) comprise electronic control units (6),
∘ the electronic control units (6) electrically control the opening and closing of the air inlet means with a controllable air passage cross-section (2) in dependence on at least one input datum acquired by said at least one data input means (17a, 17b, 17c, 17d, 22, 23), so as to adjust the opening of the air passage cross-section of the air inlet means with a controllable air passage cross-section (2),
∘ each air inlet means with a controllable air passage cross-section (2) is arranged at a wall (16) of the building (21) so as to establish direct fluidic communication between the outside and the inside of the building (21),
∘ the control means (6, 8, 9) also comprise a central control unit (8) which communicates with the electronic control units (6), and local control units (9) which communicate with the electronic control units (6),
**characterised in that** the activation of one of the local control units (9) by the user takes priority over the central control unit (8) so as to control the opening or closing of at least one of the air inlet means with a controllable air passage cross-section (2),
and **in that** the activation of one of the local control units (9) directly controls at least one of the electronic control units (6) of the air inlet means with a controllable air passage cross-section (2) in dependence on a selection by the user, by inhibiting a command emitted by the central control unit (8) or disregarding a datum coming from the sensor (17a, 17b, 17c, 17d) of the data input means (17a, 17b, 17c, 17d, 22, 23).

2. Ventilation system (1) for a building (21) according to claim 1, **characterised in that** said ventilation system (1) also comprises at least one fan (4), said at least one fan (4) circulating the air from the air inlet means with a controllable air passage cross-section (2) to said at least one air evacuation means (12).

3. Ventilation system (1) for a building (21) according to claim 2, **characterised in that** said at least one fan (4) is an integral part of a mechanical ventilation unit (14), and **in that** said at least one air evacuation means (12) comprises air extraction orifices (15), wherein the air extraction orifices (15) are fluidically connected to the mechanical ventilation unit (14) by an air extraction system comprising air evacuation conduits (18).

4. Ventilation system (1) for a building (21) according to claim 2 or claim 3, **characterised in that** at least part of the air inlet means with a controllable air passage cross-section (2) comprise at least one fan.

5. Ventilation system (1) for a building (21) according to any one of claims 1 to 4, **characterised in that** the building (21) comprises at least one dry room (19) and at least one humid room (20), and **in that** said at least one dry room (19) comprises at least one sensor (17a) which measures at least one parameter of the environment inside said at least one dry room (19), the sensor (17a) forming part of the data input means (17a, 17b, 17c, 17d, 22, 23).

6. Ventilation system (1) for a building (21) according to claim 5, **characterised in that** said at least one humid room (20) likewise comprises at least one sensor (17a) which measures said at least one parameter of the environment inside said at least one humid room (20), the sensor (17a) forming part of the data input means (17a, 17b, 17c, 17d, 22, 23).

7. Ventilation system (1) for a building (21) according to any one of claims 1 to 6, **characterised in that** said system (1) comprises at least one presence sensor (17b) arranged in the building (21), wherein the control means (6, 8, 9) control the opening and closing of the air inlet means with a controllable air passage cross-section (2) in dependence on the presence sensor (17b), the presence sensor (17b) forming part of the data input means (17a, 17b, 17c, 17d, 22, 23).

8. Ventilation system (1) for a building (21) according to claim 7, **characterised in that** the control means (6, 8, 9) control the opening of at least one of the air inlet means with a controllable air passage cross-section (2) for a predetermined period of time following detection of a presence by said at least one presence sensor (17b).

9. Ventilation system (1) for a building (21) according to any one of claims 1 to 8, **characterised in that** at least part of the air inlet means with a controllable air passage cross-section (2) comprise a sensor (17c) which measures at least one parameter of the air passing through the corresponding air inlet means with a controllable air passage cross-section (2), the sensor (17c) forming part of the data input means (17a, 17b, 17c, 17d, 22, 23), and **in that** the control means (6, 8, 9) control the opening and closing of the air inlet means with a controllable air passage cross-section (2) in dependence on at least one parameter of the air passing through said air inlet means with a controllable air passage cross-section (2).

10. Ventilation system (1) for a building (21) according to any one of claims 1 to 9, **characterised in that** said system (1) also comprises air inlet means with a fixed, self-adjusting or hygro-adjustable air passage cross-section, which means are different from the air inlet means with a controllable air passage cross-section (2).

11. Ventilation system (1) for a building (21) according to any one of claims 1 to 10, **characterised in that** the control means (6, 8, 9) control the air inlet means with a controllable air passage cross-section (2) in binary operation, wherein the passage from a first operating state to a second operating state is dependent on a threshold value of the parameter of the environment inside the building (21) and/or a threshold value of the parameter of the environment outside the building (21) being crossed and/or is dependent on the detection of a presence inside the building (21).

12. Ventilation system (1) for a building (21) according to any one of claims 1 to 10, **characterised in that** the control means (6, 8, 9) control the air inlet means with a controllable air passage cross-section (2) in a correlative manner relative to at least one datum relating to the parameter of the environment inside the building (21) and/or to the parameter of the environment outside the building (21) and/or to the presence inside the building (21).

13. Ventilation system (1) for a building (21) according to any one of claims 1 to 12, **characterised in that** the air inlet means with a controllable air passage cross-section (2) are electrically actuated, in particular motorised, air inlet doors, wherein each air inlet door comprises at least one closing flap (5) for closing an air circulation conduit (3) formed in a body of said door.
